# EUROPÄISCHE PATENTSCHRIFT

(11) **EP 1 301 308 B1**
(45) Veröffentlichungstag und Bekanntmachung des Hinweises auf die Patenterteilung: **12.01.2005**
(21) Anmeldenummer: 01969433.0
(22) Anmeldetag: 19.07.2001
(51) Int. Cl.: B23K 20/12, B29C 65/06

(54) **VERFAHREN UND VORRICHTUNG ZUM REIBRÜHRSCHWEISSEN MIT SIMULTANER KÜHLUNG**
METHOD AND DEVICE FOR FRICTION STIR WELDING WITH SIMULTANEOUS COOLING
PROCEDE DE SOUDAGE PAR FRICTION ET AGITATION AVEC REFROIDISSEMENT SIMULTANE

(30) Priorität: 20.07.2000 DE 10035332
(43) Veröffentlichungstag der Anmeldung: 16.04.2003
(73) Patentinhaber: EADS Deutschland GmbH, 85521 Ottobrunn (DE)
(72) Erfinder: SCHEGLMANN, Gerhard, 183324 Ruhpolding (DE); PALM, Frank, 81737 München (DE); RÄTHER, Klaus, 85635 Höhenkirchen (DE)
(86) Internationale Anmeldenummer: PCT/EP2001/008344
(87) Internationale Veröffentlichungsnummer: WO 2002/007923

(56) Entgegenhaltungen:
- EP-A- 0 810 056
- DE-A- 19 830 550
- US-A- 3 948 428
- PATENT ABSTRACTS OF JAPAN vol. 1999, no. 09, 30. Juli 1999 (1999-07-30) & JP 11 104860 A (SHOWA ALUM CORP), 20. April 1999 (1999-04-20)
- PATENT ABSTRACTS OF JAPAN vol. 1998, no. 13, 30. November 1998 (1998-11-30) & JP 10 225781 A (SHOWA ALUM CORP), 25. August 1998 (1998-08-25)

## Beschreibung

Die Erfindung betrifft ein Verfahren zum Reibrührschweißen gemäß dem Oberbegriff des Patentanspruchs 1 und eine Vorrichtung gemäß dem Oberbegriff des Patentanspruchs 6 (siehe, z.B. EP-A-0 810 056).

Die Kühlung der zu verbindenden Materialien beim Reibrührschweiß-Prozess (FSW-Prozess) erfolgt in bekannter Weise dadurch, dass der Schweißvorgang vollständig unter Wasser ausgeführt wird. Bei diesem Verfahren tritt insbesondere der Nachteil auf, dass Al/Mg-Legierungen infolge der starken Sauerstoff-Affinität und des im Kühlwasser enthaltenen Sauerstoffs nicht mit guter Qualität geschweißt werden können. Außerdem entzieht das Kühlwasser bei dieser Kühltechnologie dem Prozeß zu viel Wärme, so dass keine ausreichende Plastifizie-rung der zu fügenden Materialien gewährleistet ist. Es können dadurch wegen ungenügendem Materialtransport Fehler in der Schweißnaht, wie z.B. Poren, entstehen, die die Herstellung einer technisch einwandfreien Schweißnaht verhindern.

Die Möglichkeit für ein gekühltes Reibrührschweißen von Al/Mg-Legierungen wäre aber insbesondere im Hinblick auf das Fügen von großflächigen Blechen, wie es z.B. im Flugzeugbau auftritt, von großer wirtschaftlicher Bedeutung.

Ein anderer Nachteil des bekannten Verfahrens besteht darin, dass bei einem ungekühlten Prozess ein starker Verzug auftritt,der ein Nachbehandeln der verschweißten Objekte zur Folge haben kann.

Aus der Druckschrift EP-A-0 810 056 ist ein Verfahren zum Reibrührschweißen mit gleichzeitiger Kühlung bekannt, bei der über eine Düse ein Kühlmittel, beispielsweise in flüssiger oder gasförmiger Form, in Richtung Reibrührschweißwerkzeug sowie dem zu schweißenden Bauteil gesprüht wird.

Der Erfindung liegt die Aufgabe zugrunde, ein Verfahren zum Reibrührschweißen zu schaffen, mit dem eine Schweißung von Legierungen mit hoher Sauerstoff-Affinität und/oder die Erzeugung einer hohen Plastifizierungsenergie möglich und der Wärmeabfluss von der Schweißstelle gut steuerbar ist.

Diese Aufgabe wird erfindungsgemäß durch die Merkmale des Patentanspruchs 1 gelöst. Weiterbildungen der Erfindung sind in den Unteransprüchen angegeben. Eine Vorrichtung zur Durchführung des Verfahrens ist in Patentanspruch 6 angegeben.

Die erfindnungsgemäße Lösung verwendet vorteilhaft eine kombinierte Gas- und Wasserkühlung, in der die Wasserzufuhr an das Pin-Werkzeug auf den Nachlaufbereich und die Seitenbereiche des Pin-Werkzeuges begrenzt ist und eine eventuell auftretende Wasserfilmbildung an der vorderen Seite des Pin-Werkzeuges - an der sich die offene Schweißstelle befindet - durch den von vorn wirkenden Gasstrom verhindert ist.

Dabei ist die erfindungsgemäße Lösung nicht auf eine bestimmte Lage der Schweißnaht begrenzt und kann auch auf die Herstellung von horizontalen Schweißnähten angewendet werden.

Mit der kombinierten Gas- und Wasserkühlung kann außerdem durch eine Abstimmung des Gas-und Wasserstromes zueinander der Wärme-abfluss von der Schweißstelle gut gesteuert werden und es ist damit eine gezielte Einstellung der Festigkeit in der Schweiß-naht und eine Verringerung des üblicherweise in der Wärmeein-flusszone (WEZ) entstehenden Festigkeitsabfalles ("Härtesack") möglich, in dem Wärme da zugelassen wird, wo sie für den Pro-zess notwendig ist und dort abgeführt, wo sie für den Prozess schädlich ist.

Ein weiterer Vorteil des erfindungsgemäßen Kühlens ist darin zu sehen, dass das Reibrührschweißen mit einer vorlaufenden Laser-strahl-, Lichtbogen- oder Flammenerwärmung kombiniert werden kann, was bei einer Kühlung im Wasserbad nicht möglich ist.

Auch läßt sich für schwer umformbare Werkstoffe ein kombinier-ter Schweißprozess bestehend aus dem erfindungsgemäß gekühltem Reibrührschweißprozess und einem vorlaufenden Laserstrahl-schweißprozess durchführen.

Anhand der Zeichnung wird nachstehend ein Ausführungsbeispiel der Erfindung näher erläutert.
- Fig.1: zeigt ein erfindungsgemäßes Verfahren zum Reibrührschweißen,
- Fig.2: einen Kühlring für die Wasserkühlung in Unteransicht und
- Fig.3: zeigt schematisch die unterschiedlichen Materialzonen beim Reibrührschweißen.

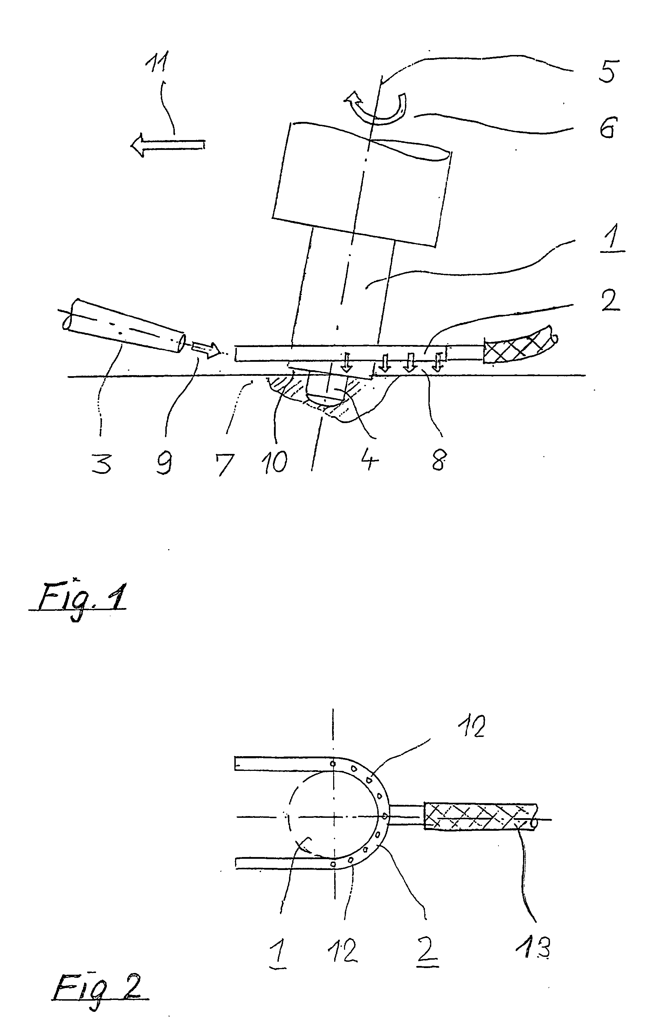

In dem in Fig.1 gezeigten Verfahren zum Reibrührschweißen wird ein Pin-Werkzeug 1 von einem in Vorschubrichtung mitlaufenden Kühlring 2 mit Wasser und von einer in Vorschubrichtung mitlau-fenden Gasdüse 3 mit Luft gekühlt.

Das Pin-Werkzeug 1 ist mit seinem Pin 4 unter Rotation um seine Längsachse 5 - gemäß dem Rotationspfeil 6 - und Druck in die Oberfläche des zu schweißenden Bauteiles 7 hineingerieben und wird unter Aufrechterhaltung der Rotation im Sinne des Rich-tungspfeiles 11 entlang der Schweißstosses bewegt. Die Längs-achse 5 des Pin-Werkzeuges 1 ist entgegen der Vorschubrichtung etwas aus der Lotrechten heraus nach hinten geneigt.

Die vorangehend beschriebenen Bewegungen des Pin-Werkzeuges 1 und die Neigung der Längsachse 5 sind bekannte Verfahrensmerk-male des Reibrührschweißens.

Der Kühlring 2 und die Gasdüse 3 sind über justierbare Halterungen starr mit dem Vorschubschlitten des Pin-Werkzeuges 1 verbunden. In Fig.1 sind der Vorschubschlitten und die Halterungen aus Gründen der zeichnerischen Vereinfachung nicht gezeigt.

Im Nachlaufbereich und in den benachbarten Seitenbereichen des Pin-Werkzeuges 1 tritt Kühlwasser aus dem mitlaufenden Kühlring 2 gemäß den gezeigten Richtungspfeilen 8 aus. Die mitlaufende Gasdüse 3 bläst gemäß dem gezeigten Richtungspfeil 9 von vorn Kühlluft gegen das Pin-Werkzeug 1 und gegen das aus dem Kühl-ring 2 austretende Kühlwasser.

Das Anblasen mit der Kühlluft hat zusätzlich zu dem damit erreichten Kühleffekt die Wirkung, dass das Kühlwasser nicht infolge von Kapillarwirkungen in den keilförmigen Spalt 10 zwischen dem zurückgekippten Pin-Werkzeug 1 und dem Bauteil 7 eindringen kann und unterstützt damit die der erfindungsgemäßen Lösung zugrunde liegende Absicht, das aufgeriebene und erwärmte Material der Schweißstelle von Kühlwasser frei zu halten. Damit kann die Korrosion des aufgeriebenen Schweißmaterials mit dem Sauerstoff des Wassers unterbunden werden.

Fig.2 zeigt den Kühlring 2 in Unteransicht, d.h. mit Blick auf die dem Bauteil 7 zugeordneten Ringfläche, in der einzelne Düsen 12 zum Austreten des Kühlwassers angeordnet sind. Das Kühlwasser wird dem Kühlring 2 über einen Schlauch 13 zugeführt.

Im Ausführungsbesispiel ist der Kühlring 2 beispielsweise nicht als geschlossener, um das Pin-Werkzeug 1 liegender Ring ausge-bildet, sondern der Kühlring öffnet sich in u-förmiger Ausbil-dung zur Gasdüse 3, wodurch die von vorn heranströmende Kühl-luft unbehindert von dem Kühlring 2 auf das Pin-Werkzeug 1 strömen kann.

Die Anordnung der Wasserdüsen 12 ist auf den hinteren Bereich des Kühlringes beschränkt, so dass nur der Nachlaufbereich und die Seitenbereiche am Pin-Werkzeug mit Kühlwasser benetzt werden.

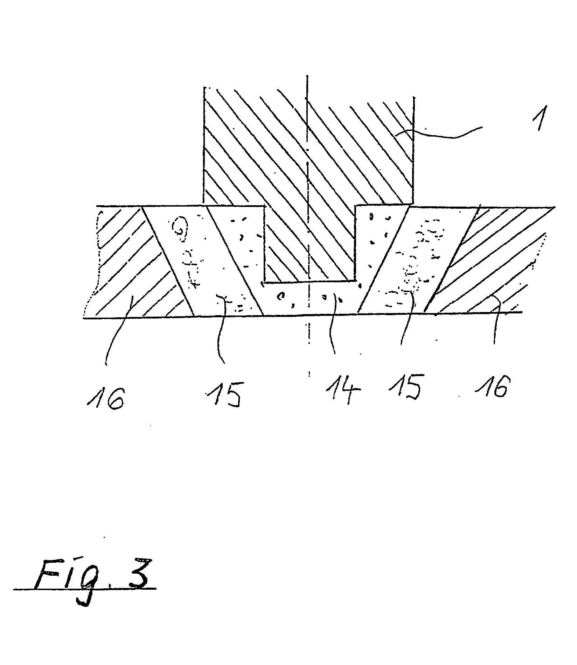

Die in Fig.3 schematisch gezeigten Materialzonen beim Reibrührschweißen sind die thermomechanisch umgeformte Zone (TMZ) 14, die Wärmeeinflusszone (WEZ) 15 und der Grundwerkstoff 16. Nach dem Abkühlen der Schweißnaht bleibt im Bereich der Wärme-einflusszone zu beiden Seiten der Schweißnaht üblicherweise der unerwünschte Festigkeitsabfall zurück.

Bei Anwendung der erfindungsgemäßen Lösung auf Bleche der Legierungen AA6013-T4 und AA6013-T6 konnte dieser Festigkeits-abfall deutlich verringert werden. Die Dicke der Bleche lag bei 4 mm und das Verhältnis von Drehzahl zu Vorschubgeschwindigkeit am Pin-Werkzeug 1 betrug 3,5 U/mm, läßt sich aber bei Bedarf in Grenzen von etwa 1 U/mm.bis etwa 10 U/mm variieren.

Bei einer Kombination des erfindungsgemäßen Reibrührschweißens mit einer vorlaufenden Laserstrahlerwärmung, die bei der herherkömmlichen Kühlung in einem Wasserbad nicht ausführbar wäre, wird die beim Reibrührschweißen durch Reibung erzeugte Wärme duch die Laserstrahlerwämung noch gezielt verstärkt und die Erwärmung der Schweißstelle kann dadurch auf die Erzielung einer optimalen Schweißnaht eingestellt werden. Dazu ist die Laserstrahlquelle in Vorschubrichtung vor dem Pin-Werkzeug mit einem bestimmten Abstand, z.B. von etwa 2 bis 3cm, starr ver-bunden mit dem Pin-Werkzeug angeordnet.

Dieselbe Anordnung, wie vorangehend bei der Laserstrahlerwärmung beschrieben, erfolgt bei einer Kombination des erfindungs-gemäßen Reibrührschweißens mit einem vorlaufenden Laserstrahlschweißprozess, wobei anstelle der Laserstrahlquelle zur Erwär-mung eine Laserstrahlquelle zum Schweißen mit dem Pin-Werkzeug starr verbunden ist. Dabei wird mittels dem vorlaufenden Laser-strahlschweißprozess eine erste Schweißnaht gelegt, auf die von dem nachfolgenden Reibrührschweißprozeß eine zweite Schweißnaht gelegt wird.

Alternativ zu der oben beschriebenen Verwendung von Kühlwasser und von Kühlluft, kann auch ein anderes wasserhaltiges Kühl-mittel und ein anderes Gas zum erfindungsgemäßen Kühlen mit dem Kühlring 2 und der Gasdüse 3 verwendet werden. Dazu kommen alle in der Schweißtechnologie bekannten Kühlflüssigkeiten und Schutzgase in Betracht.

## Patentansprüche

1. Verfahren zum Reibrührschweißen unter Verwendung einer kombinierten Gas-und Flüssigkeitskühlung, **dadurch gekennzeichnet, dass** die Kühlflüssigkeit von einem mit dem Pin-Werkzeug (1) mitlaufenden Kühlring (2) örtlich begrenzt auf den Nachlaufbereich und die dem Pin-Werkzeug (1) benachbarten Seitenbereiche den Schweißstelle gespritzt wird und dass zusätzlich eine mit dem Pin-Werkzeug (1) mitlaufende Gasdüse (3) Kühlgas von vom gegen das Pin-Werkzeug (1) und gegen die aus dem Kühlring (2) austretende Kühlflüssigkeit bläst.

2. Verfahren zum Reibrührschweißen nach Patentanspruch 1, **dadurch gekennzeichnet, dass** als Kühlflüssigkeit Wasser und als Kühlgas Luft verwendet wird.

3. Verfahren zum Reibrührschweißen nach einem der Patentansprüche 1 oder 2 **dadurch gekennzeichnet, dass** für das Schweißen von Al/Mg-Blechen der Wert für das Verhältnis von Drehzahl zu Vorschubgeschwindigkeit am Pin-Werkzeug (1) in dem Bereich von etwa 1 U/mm bis etwa 10 U/mm liegt.

4. Verfahren zum Reibrührschweißen nach einem der Patentansprüche 1 bis 3 **dadurch gekennzeichnet, dass** das Reibrührschweißen mit einer dem Pin-Werkzeug (1) vorlaufenden Laserstrahlerwärmung kombiniert ist.

5. Verfahren zum Reibrührschweißen nach einem der Patentansprüche 1 bis 3 **dadurch gekennzeichnet, dass** das Reibrührschweißen mit einem dem Pin-Werkzeug (1) vorlaufenden Laserstrahlschweißprozess kombiniert ist.

6. Vorrichtung zum Durchführen eines Verfahrens zum Reibrührschweißen nach Patentanspruch 1 mit kombinierter Gas- und Flüssigkeitskühlung, umfassend ein Pin-Werkzeug (1) und eine Kühlvorrichtung, wobei das Pin-Werkzeug (1) zwei Seitenbereiche, einen Nachlaufbereich und einen Vorlaufbereich aufweist, **dadurch gekennzeichnet, dass** die Kühlvorrichtung einen Kühlring (2) umfasst, welcher das Pin-Werkzeug (1) zumindest teilweise umschließt und mit dem Pin-Werkzeug (1) mitlaufend ausgebildet ist und mehrere Düsen (12) aufweist, die derart angeordnet sind, dass aus den Düsen (12) austretende Kühlflüssigkeit auf den Nachlaufbereich und die Seitenbereiche des Pin-Werkzeuges (1) örtlich begrenzt ist, und dass die Kühlvorrichtung ferner eine im Vorlaufbereich des Pin-Werkzeuges (1) angeordnete und mit dem Pin-Werkzeug (1) mitlaufende Gasdüse (3) aufweist, um Kühlgas gegen das Pin-Werkzeug (1) und gegen die aus den Düsen (12) austretende Kühlflüssigkeit zu blasen.

7. Vorrichtung nach Patentanspruch 6, **dadurch gekennzeichnet, dass** der Kühlring (2) nach vorn geöffnet ist, um Kühlgas über die Gasdüse (3) ungehindert von vorn gegen das Pin-Werkzeug (1) zu blasen.

## Claims

1. Method for friction stir welding using combined gas and liquid cooling, **characterised in that** the cooling liquid is sprayed from a cooling ring (2), running together with the pin tool (1), in a locally limited manner onto the follow-on region and the lateral regions of the welding point that are adjacent to the pin tool (1), and **in that** in addition a gas nozzle (3), running together with the pin tool (1), blows cooling gas from the front towards the pin tool (1) and towards the cooling liquid coming out of the cooling ring (2).

2. Method for friction stir welding according to claim 1, **characterised in that** water is used as the cooling liquid and air is used as the cooling gas.

3. Method for friction stir welding according to one of claims 1 or 2, **characterised in that** for welding Al/Mg metal sheets the value for the ratio of the rotational speed to the rate of feed at the pin tool (1) lies in the region of approximately 1 rev/mm to approximately 10 rev/mm.

4. Method for friction stir welding according to one of claims 1 to 3, **characterised in that** the friction stir welding is combined with laser-beam heating running ahead of the pin tool (1).

5. Method for friction stir welding according to one of claims 1 to 3, **characterised in that** the friction stir welding is combined with a laser-beam welding process running ahead of the pin tool (1).

6. Device for carrying out a method for friction stir welding according to claim 1 with combined gas and liquid cooling, comprising a pin tool (1) and a cooling device, with the pin tool (1) having two lateral regions, a follow-on region and a forward region, **characterised in that** the cooling device comprises a cooling ring (2) that encloses the pin tool (1) at least in part and is formed so that it runs together with the pin tool (1) and has a plurality of nozzles (12) that are arranged in such a way that cooling liquid coming out of the nozzles (12) is locally limited to the follow-on region and the lateral regions of the pin tool (1), and **in that** the cooling device has, furthermore, a gas nozzle (3) that is arranged in the forward region of the pin tool (1) and runs together with the pin tool (1) in order to blow cooling gas towards the pin tool (1) and towards the cooling liquid coming out of the nozzles (12).

7. Device according to claim 6, **characterised in that** the cooling ring (2) is open towards the front in order to blow cooling gas via the gas nozzle (3) in an unhindered manner from the front towards the pin tool (1).

## Revendications

1. Procédé de soudage par friction et agitation qui utilise un refroidissement combiné au gaz et à l'eau,
**caractérisé en ce que**
le liquide de refroidissement provenant d'une bague de refroidissement (2) entraînée en même temps que l'outil à broche (1) est envoyé dans un espace limité à la zone arrière et aux zones latérales - du point de soudure - voisines de l'outil à broche (1), et
en outre une buse à gaz (3) entraînée en même temps que l'outil à broche (1) souffle du gaz de refroidissement par l'avant contre l'outil à broche (1) et contre le liquide de refroidissement qui sort de la bague de refroidissement (2).

2. Procédé de soudage par friction et agitation selon la revendication 1,
**caractérisé en ce que**
le liquide de refroidissement utilisé est l'eau et le gaz de refroidissement utilisé est l'air.

3. Procédé de soudage par friction et agitation selon l'une des revendications 1 ou 2,
**caractérisé en ce que**
pour souder des tôles en Al-Mg, la valeur du rapport entre la vitesse de rotation et la vitesse d'avance sur l'outil à broche (1) se situe dans une gamme comprise entre environ 1 tr/mn et environ 10 tr/mn.

4. Procédé de soudage par friction et agitation selon l'une des revendications 1 à 3,
**caractérisé en ce que**
le soudage par friction et agitation est combiné à un chauffage au laser en amont de l'outil à broche (1).

5. Procédé de soudage par friction et agitation selon l'une des revendications 1 à 3,
**caractérisé en ce que**
le soudage par friction et agitation est combiné à une opération de soudage au laser en amont de l'outil à broche (1).

6. Dispositif pour exécuter un procédé de soudage par friction et agitation selon la revendication 1, qui utilise le refroidissement combiné au gaz et à l'eau et qui comprend un outil à broche (1) et un dispositif de refroidissement, l'outil à broche (1) présentant deux zones latérales, une zone arrière et une zone en avant,
**caractérisé en ce que**
le dispositif de refroidissement comprend une bague de refroidissement (2) qui entoure au moins en partie l'outil à broche (1) et est conçu pour être entraîné avec l'outil à broche (1) et présente plusieurs buses (12) disposées de telle manière que le liquide de refroidissement qui sort des buses (12) est limité dans l'espace à la zone arrière et aux zones latérales de l'outil à broche (1),
et le dispositif de refroidissement présente en outre une buse à gaz (3) placée dans la zone en avant de l'outil à broche et entraînée en même temps que l'outil à broche afin de souffler du gaz de refroidissement contre l'outil à broche (1) et contre le liquide de refroidissement qui sort des buses (12).

7. Procédé selon la revendication 6,
**caractérisé en ce que**
la bague de refroidissement (2) est ouverte vers l'avant afin de souffler sans obstacle du gaz de refroidissement grâce à la buse à gaz (3) de l'avant contre l'outil à broche (1).
